# DEMANDE DE BREVET EUROPEEN

(11) **EP 1 837 364 A1**
(43) Date de publication de la demande: **26.09.2007**
(21) Numéro de dépôt: 06300248.9
(22) Date de dépôt: 20.03.2006
(51) Int. Cl.: C08J 7/00

(54) **Procédé de neutralisation de l'acidité résiduelle contenue dans les composés phénoliques**

(71) Demandeur: A. Weber (Société Anonyme), 57520 Rouhling (FR)
(72) Inventeur: Weber, Franck, 57520, Rouhling (FR)
(74) Mandataire: Nuss, Laurent

(57) **Abrégé**

La présente invention concerne un procédé de neutralisation de l'acidité résiduelle contenue dans les composés phénoliques.

Procédé, caractérisé en ce qu'il consiste à ajouter un composé neutralisant comportant un produit réactif avec les acides organiques et inorganiques et un composé d'enrobage, de sorte que le produit réactif réagit seulement après le début de la polymérisation, le composé d'enrobage permettant une libération contrôlée à retard, conditionnelle ou progressive, du composé réactif de manière à ne pas empêcher et à minimiser ses interférences sur la réticulation du polymère.

L'invention est plus particulièrement applicable dans le domaine de l'industrie, en particulier des industries des mines et du bâtiment mettant en oeuvre des composés à base de résine formophénolique.

## Description

La présente invention concerne tous les domaines de l'industrie, en particulier des industries des mines et du bâtiment mettant en oeuvre des composés à base de résine formo-phénolique en particulier ayant une catalyse entraînant la présence d'acide minéral ou organique résiduel et a pour objet un procédé de neutralisation de cette acidité résiduelle.

L'invention a également pour objet les moyens mis en oeuvre par ce procédé.

Le but de la présente invention est d'obtenir une diminution de l'acidité résiduelle présente dans les composés à base de résine formo-phénolique en particulier ayant une catalyse entraînant la présence d'acide minéral ou organique résiduelle, afin d'éviter les problèmes sanitaires, environnementaux, la corrosion ou la dégradation des supports ou autres matériaux présentant ce type de réaction aux acides.

Dans une majorité d'application, la polymérisation des résines phénoliques de type résol nécessite la présence d'acide. La quantité d'acide nécessaire va dépendre du type de résol, du type d'application et des conditions de températures. La méthode la plus simple pour neutraliser un acide est l'utilisation d'une base forte. Mais l'ajout d'alcalin provoque une neutralisation rapide de l'acide et va donc l'empêcher de jouer son rôle de catalyseur. De plus l'ajout d'alcalin dans les résines phénolique de type résol provoque une augmentation plus rapide de leur viscosité dans le temps et peut aller, en fonction de la quantité ajoutée, jusqu'à une condensation complète. Il est possible d'ajouter des produits moins réactifs avec l'acide qui joueront le rôle de tampon. Pour être efficace ces produits doivent être utilisés en quantité importante et le résultat obtenu n'est pas toujours optimal. On peut citer, par exemple, les hydrates d'aluminium.

Actuellement, la neutralisation est effectuée par ajouts ou passage d'alcalin dans le polymère déjà formé, lorsque cela est possible, par exemple essentiellement sur les mousses, ou encore par ajout d'alcalin à la surface du polymère fini. A cet effet, un procédé connu par US-A-5 232 745 consiste à neutraliser les surfaces. D'après ce document, il est mis en oeuvre un panneau en mousse phénolique, dont les faces sont recouvertes de fibre de verre contenant un agent neutralisant (sel métallique inorganique) appliqué en poudre ou en solution aqueuse. Toutefois, le procédé décrit permet uniquement une neutralisation en surface et il subsiste une acidité résiduelle au coeur de la mousse.

Un autre procédé de neutralisation connu est le passage d'alcalins sous forme gazeuse par exemple de l'ammoniaque, dans la mousse. Ce procédé, comme le précédent, n'est applicable que sur des pièces préformées ou prédécoupées et est difficilement transposables à des produits susceptibles d'être projetés, injectés ou directement mis en place sur site.

Il existe encore d'autres procédés ayant pour objet des systèmes dit non corrosifs, tels que décrits dans US-A-4 122 045 qui a pour objet l'action du tétraborate de sodium en relation avec de l'acide borique.

Dans ces différents procédés, l'acide présent n'est pas totalement neutralisé.

La présente invention a pour but de pallier ces inconvénients en proposant un procédé de neutralisation de l'acidité résiduelle résultant de la présence d'acide minéral ou organique résiduel dû à la catalyse de composés à base de résine formo-phénolique.

A cet effet, le procédé de neutralisation de l'acidité résiduelle contenue dans les composés phénoliques constitués de résines phénoliques de type résol, mises en oeuvre par catalyse avec un ou des acides organiques ou inorganiques, tels que l'acide sulfurique, l'acide phosphorique, un acide organique fort comme les acides arylsulfoniques tel que les acides phénol sulfoniques, toluène sulfoniques, méthane sulfoniques, un acide organique ou arylsulfonique modifié, un acide carboxylique, tel que l'acide lactique, maléique, utilisé en mélanges avec un ou plusieurs acides forts, ces acides étant à la fois catalyseurs et permettant éventuellement un soufflage chimique du composé phénolique par réaction avec des composés carbonatés, tels que du bicarbonate de sodium, du carbonate de calcium, pris seuls ou en mélange, est caractérisé en ce qu'il consiste à ajouter un composé neutralisant comportant un produit réactif avec les acides organiques et inorganiques et un composé d'enrobage, de sorte que le produit réactif réagit seulement après le début de la polymérisation, le composé d'enrobage permettant une libération contrôlée à retard, conditionnelle ou progressive, du composé réactif de manière à ne pas empêcher et à minimiser ses interférences sur la réticulation du polymère.

On parlera ci-après de composé dit "neutralisant". Ce composé "neutralisant" comportera un composé dit "réactif" envers le ou les acides et un composé dit "d'enrobage" retardant cette réaction.

L'invention met en oeuvre des composés enrobés, bloqués ou ayant subit un traitement de surface susceptible de ralentir leur réaction de neutralisation de l'acide. Un tel traitement permet à l'acide de jouer, dans un premier temps, son rôle de catalyseur sur la résine et accessoirement son rôle dans le phénomène d'expansion obtenue par décomposition de composés carbonatés seuls ou en mélange, tels que, par exemple, le carbonate de calcium, le bicarbonate de sodium, etc..., en présence ou non d'un ou plusieurs tensioactifs ou surfactants permettant de stabiliser la mousse ainsi formée. Un tel traitement est notamment décrit dans EP 0 629 655 B1.

L'acide résiduel est neutralisé, dans un deuxième temps, lorsque l'enrobage, le blocage ou le traitement de surface est enlevé. A cet effet, le composé neutralisant peut préférentiellement, mais pas nécessairement, être ajouté de façon stoechiométrique par rapport à la quantité de fonctions acides à neutraliser.

Le traitement, le blocage ou l'enrobage du composé neutralisant doit permettre la neutralisation de l'acidité résiduelle contenue dans le matériau après sa polymérisation ou en fin de polymérisation.

Par neutralisation, on entend que le pH du composé phénolique, après sa mise en oeuvre, doit se situer, de préférence, entre 6 et 8, et cela, quelles que soient les conditions d'humidité.

L'invention est plus particulièrement adaptée dans les procédés mettant en oeuvre des résines phénoliques de type résol. Ce résol est, ensuite, mis en oeuvre avec une catalyse de type acide.

Le composé réactif doit réagir avec les fonctions acides rencontrées, afin de les neutraliser. Ces acides peuvent être soit des acides minéraux comme, par exemple l'acide sulfurique, l'acide phosphorique, ..., soit des acides arylsulfoniques modifiés ou non, comme par exemple l'acide phénol sulfonique, l'acide toluène sulfonique, l'acide benzène sulfonique, l'acide méthane sulfonique,..., soit des acides carboxyliques, tels que l'acide oxalique, l'acide lactique, l'acide benzoïque,..., pris seuls ou en mélange. Dans le cas des acides carboxyliques, il est souvent nécessaire de les associer à un ou plusieurs acides forts.

Le composé réactif se présente, de préférence, sous forme liquide, solide ou de cire, à température ambiante. On entend par température ambiante, la plage de température que peut subir le produit avant sa mise en oeuvre (fabrication, stockage, préchauffage,...).

Le composé réactif peut également être un composé naturel tel que des poudres de roches, ou sous forme synthétique.

Par ailleurs, le composé réactif peut aussi être une poudre minérale soluble ou non dans l'eau, à savoir, telle que :
1. les carbonates, de préférence de sodium, de calcium, de potassium, de zinc, de zinc basique, de magnésium, de fer, d'ammonium, de manganèse, de cuivre, de cuivre basique, ....
2. les bicarbonates, de préférence d'ammonium, de potassium, de sodium, ....
3. les hydroxydes, de préférence de calcium, de magnésium, de potassium, de sodium, ...
4. les oxydes, de préférence de magnésium, de calcium, de zinc, ...
5. les silicates, de préférence de sodium, de potassium,...
6. les phosphates, de préférence tri potassique, de calcium, de cuivre, de potassium, de magnésium, de sodium, de zinc, hexa méta phosphate de sodium, pyrophosphate tétrapotassique,...

Enfin, le composé réactif peut être un composé organo minéral, de préférence solide, tel que, par exemple, les composés effervescents carbonate de glycine sodique ou encore un composé organique, tel que les phénolates, les amines primaires.

Les composés alcalins présentant un pH supérieur à 9 en solution à 1% sont à préférer de façon générale et en particulier si la quantité de solide incorporable dans le produit est limitée et/ou si la quantité d'acide à neutraliser est élevée. A cet effet, à titre d'exemple, les carbonates de calcium (pH 9.5), hydroxydes de magnésium (pH 10.6), oxydes de magnésium (10.8), hydroxydes de barium (13.4), etc... seront avantageusement mis en oeuvre. Certains composés peu solubles en milieu aqueux, tels que le bicarbonate de sodium (pH 8.0), présentent un pH en solution faible, mais réagissent facilement avec les acides.

Les composés susceptibles de libérer un gaz lors de leur réaction avec l'acide , tels que les carbonates et bicarbonates, peuvent générer des problèmes de structures ou des modifications de propriétés dans le polymère final, par exemple en augmentant le pourcentage de cellules ouvertes dans une mousse phénolique. De la même façon, on favorisera les produits les moins dangereux et les plus disponibles.

Les différents composés énumérés ci-dessus ne sont, bien entendu, pas cités de manière exhaustive.

Le terme composé d'enrobage désigne le ou les composés utilisés pour entourer le ou les composés réactifs, afin d'en différer les actions. D'autres termes peuvent être utilisés , à savoir les agents filmogènes, les agents enveloppants, les excipients à libération contrôlée, les matrices pour libération retard,etc.

Un agent filmogène ou enveloppant est utilisé pour former un mince film autour du composé réactif.

Un excipient à libération contrôlée ou une matrice pour libération retard est un ingrédient contenu dans un système qui permet à un composé d'être libéré au fil du temps.

Un agent séquestrant est un agent dont la structure moléculaire peut envelopper et conserver un certain type d'ion et qui modifie son interaction avec les autres ingrédients comme le citrate de potassium ou l'acide tartrique.

Le composé d'enrobage peut être de nature différente, à savoir, par exemples :
- un polymère d'origine naturelle tel que la gélatine, la caséine, le chitosane, l'agarose , l'amidon et l'amidon modifié, l'alginate de sodium, ....
- un polymère semi-synthétique dérivé cellulosique tel que les acétates de cellulose, l'acétate phtalate de cellulose, la cellulose butyrate, l'éthylcellulose, le méthylcellulose, l'hydroxypropylméthylcellulose, l'acetate-triméllitate de cellulose,etc...
- un polymère synthétique comme, par exemple, les copolymères d'esters acryliques et méthacryliques, les polyoléfines, les polyéthylènes, les polypropylènes, les copolymères acrylo-vinyliques,etc...
- un lipide solide à température ambiante du type des acides gras tels que l'acide palmitique, l'acide stéarique; les alcool gras , les glycérides à longue chaînes, les dérivés cholestériques, les cires d'origines diverses, telle que la cire de Carnauba, la cire d'abeille, etc...
- une cire d'origine pétrolière (dite cire minérale) comme par exemple les paraffines, les composés paraffiniques branchés, les hydrocarbures naphténiques, etc...
- des produits solubles tels que des sucres ou des dérivées de sucres.

Les matrices grasses, du type huiles végétales hydrogénées, permettent, de par la variété de leur point de fusion d'adapter la vitesse de libération. Il en est de même pour les matrices cellulosiques, en variant les proportions lactose/esters de cellulose-acétate de cellulose, acétobutyrate de cellulose et acétopropionate de cellulose et en ajoutant un plastifiant.

Par ailleurs, les esters cellulosiques, l'acétate de cellulose (CA), l'acétobutyrate de cellulose (CAB) et l'acétoproponate de cellulose (CAPr), forment des films insolubles utilisés dans les formes à libération retard ou prolongée.

Le composé d'enrobage peut être désactivé de différentes façons, par exemple sous l'action de la chaleur, d'un solvant, d'une modification des tensions de surfaces, d'une réaction chimique permettant sa dégradation ou une modification de sa forme physique ou chimique entraînant la libération du composé réactif.

Cet enrobage peut être de nature à être dégradé, liquéfié ou dissout sous l'effet de la chaleur et se présenter sous forme de paraffines ou de composés thermo-fusibles, tels que du polyéthylène. Ainsi, à partir d'une température définie, le composé sera libéré et pourra neutraliser l'acidité résiduelle. Cette température pourra être générée par la réaction exothermique, ou par une source de chaleur extérieure, par exemple en mettant le composé dans une étuve après polymérisation.

La température d'activation peut varier en fonction du type de matériaux d'enrobage choisi, ainsi, par exemple, pour une paraffine 42-44, la température de fusion sera comprise entre 42°C et 44°C, alors que pour une paraffine59-61, cette température de fusion sera comprise entre 59°C et 61°C. Pour une cire d'abeilles la température de fusion sera comprise entre62°C et 65°C, alors que pour une cire de candelilla ladite température de fusion sera comprise entre 67°C et 69°C et pour une cire de carnauba elle sera comprise entre 83°C et 86°C. Dans le cas de mise en oeuvre de palmitate de méthyle, la température de fusion sera comprise entre 29.5°C et30°C, alors que pour le palmitate de sorbitol, cette température de fusion sera comprise entre 47°C et 78°C. Pour le palmitate de zinc, cette température de fusion sera de 100°C et pour le palmitate de cuivre, cette température sera de 120°C.

La température de fusion d'un stéarate de di propylène glycol ainsi mise en oeuvre est comprise entre 34°C et 35°C et celle d'un stéarate de mono propylène glycol entre 37°C et 39°C. Un stéarate de méthyle présentera une température de fusion 39°C, tandis qu'un stéarate de polyvinyle aura une température de fusion comprise entre 47°C et 48°C. Dans le cas de mise en oeuvre d'un stéarate de diéthylène glycol, la température de fusion sera comprise entre 54°C et 59°C et dans celui d'un stéarate d'éthylène glycol, elle sera de 60°C à 61°C. La température de fusion d'un stéarate de glycérol sera de 81°C et celle d'un stéarate de guanidine est comprise entre 84°C et 86°C. Enfin, la température de fusion d'un stéarate de magnésium est de 88.5°C et celle d'un stéarate de manganèse est de 100°C.

Plusieurs composés d'enrobage peuvent être combinés pour étager la libération du composé neutralisant.

L'enrobage ou le traitement de surface peut conférer au composé un effet hydrophobe ou hydrophile, suivant l'effet recherché, le composé à enrober et le produit dans lequel il doit être introduit. Par ailleurs, il peut être de nature organique, à savoir à base de sucres, minérale, par exemple à base de sels plus ou moins solubles ou organo-minérale, tel qu'à base d'un stéarate de calcium.

L'épaisseur de l'enrobage ou du traitement de surface peut être modifié, afin d'optimiser le temps de réaction par rapport à la nature ou à la quantité de l'acide résiduel et au temps de mise en oeuvre du produit.

Le choix du matériau d'enrobage est fait en fonction du produit à enrober, du produit dans le quel le composé neutralisant doit être introduit et du type d'application. Par exemple dans le cas des mousses phénoliques, on choisira un produit d'enrobage qui ne nuit pas ou peu à la qualité de la mousse, afin d'éviter des phénomènes tel que le collapsage, le feuilletage, le retrait,.... Certains de ces problèmes peuvent également être résolus ou minimisés à l'aide de tensioactifs adaptés.

Le matériau d'enrobage peut être modifié pour faciliter l'incorporation du composé neutralisant dans la matrice phénolique, par exemple par éthoxylation, pour améliorer l'incorporation dans un résol en phase aqueuse.

Le composé d'enrobage peut également être de nature poreuse, de façon à limiter ou conditionner l'accès de l'acide au composé réactif permettant une neutralisation progressive de celui-ci.

Il est possible d'ajouter des agents plastifiants utilisés comme composant d'enrobage par film ou comme complément à un autre moyen d'enrobage. Ces composés, tels que l'alcool de lanoline, favorisent la répartition de l'enrobage sur les solides, perles, granules, etc.

Les composés neutralisants peuvent être utilisés seuls ou en combinaison avec d'autres composés neutralisants. Ainsi, à titre d'exemple, une combinaison de composés neutralisants ayant des effets retard différents permet d'étager les réactions de neutralisation dans le temps.

Le composé neutralisant peut être utilisé en combinaison avec d'autres substances non traitées pouvant jouer le rôle de tampon, telles que, par exemple, les citrates de sodium, tri potassium citrate, tri sodium citrate, tri calcium dicitrate tétrahydraté, tri hydrates d'aluminium. Ces substances seront, de préférence, peu ou non solubles en milieu aqueux et leur pH en solution sera inférieur à 9 pour éviter une action trop rapide avec le ou les acides présents, de façon à ne pas influencer négativement la polymérisation et, le cas échéant, l'expansion du produit.

A titres d'exemples, les substances pouvant jouer le rôle de tampon seront les suivantes :
- Tri sodium citrate (acide citrique sel trisodique) : pH 7.5 à 9 pour 10 g/l.
- Tri potassium citrate (acide citrique sel tripotassique) : pH 5 à 6 pour 25 g/l.
- Tri calcium di citrate : pH 7.5 à 9 pour 10 g/l.
- Mélange citrate/sodium hydroxyde : pH 6.
- Di potassium oxalate mono hydraté : pH 7.0 à 8.5 pour 50 g/l.
- Di sodium oxalate : pH 8 pour 30 g/l.
- Aluminium hydroxyde (hydrargillite, aluminium oxyde hydraté) : pH 8 à 9 pour 100 g/l.

Les hydroxydes de certains composés sont aussi connus sous le terme d'hydrate ou de tri-hydrate. On peut citer, par exemple, le tri-hydrate d'aluminium, l'hydrate de baryum, etc.

La quantité de composé neutralisant sera, de préférence, mais pas nécessairement additionnée de façon stoechiométrique par rapport à la quantité de fonction acide à neutraliser, de façon à ne pas diminuer les performances ou dégrader le polymère formé.

Les paramètres physiques du composé neutralisant et du composé réactif, tels que, par exemple, la granulométrie, la surface spécifique, la forme, la couleur peuvent être adaptés aux conditions d'application et aux propriétés recherchées du produit fini. Par exemple, on peut sélectionner des particules de faibles granulométrie avec de grande surface spécifique pour diminuer les risques de sédimentation du composé neutralisant dans le résol.

L'incorporation, la dispersion et le mouillage du ou des composés neutralisant peuvent être facilités par l'addition d'un tensio-actif.

En outre, le composé neutralisant peut être incorporé dans l'une ou l'autre des parties (résol, catalyseur acide, autres...), si la nature de l'enrobage, ainsi que sa compatibilité chimique et physique le permettent.

Le composé neutralisant se présente, de préférence, sous forme solide ou de cires facilement dispersables à température ambiante. On entend par température ambiante, la plage de température que peut subir le produit avant sa mise en oeuvre (fabrication, stockage, préchauffage, ...), sans être activé, afin de ne pas libérer le composé réactif avant la polymérisation.

D'autres formes de composé neutralisant peuvent être utilisées, comme, par exemple, des structures carbonées contenant le composé réactif, des formes de type micelles, liposomes, sphérulites isolant le composé réactif, nanomatériaux incluant un composé réactif, liquides réactif encapsulés ou micro-encapsulés, sans pour autant sortir du domaine de l'invention.

Selon une caractéristique de l'invention, le composé neutralisant pourra être incorporé à la résine ou additionné pendant le mélange de la résine et du catalyseur acide. Il est également possible de réaliser le mélange à l'aide d'un mélangeur dynamique ou statique.

Conformément à une autre caractéristique de l'invention, les composés en poudre pourront être utilisés en l'état, sous forme de pâte ou en suspension dans un liquide permettant leurs incorporations dans le mélange final.

Le produit mis en oeuvre par le procédé conforme à l'invention peut se présenter sous forme de bi, tri ou multi composants suivant la mise en oeuvre souhaitée.

Le ratio entre les différents produits et leur température de mise en oeuvre est variable et doit être ajusté en fonction de l'application (temps de réactions, températures ambiantes, etc....).

Selon une variante de réalisation de l'invention, l'activation du composé neutralisant est réalisée après la formation du polymère. Par exemple, en utilisant un composé d'enrobage dont la température de fusion ou la dégradation thermique est supérieure à la température de polymérisation, il est possible de libérer le composé réactif à n'importe quel moment par un cycle thermique dont la température est supérieure au point de fusion du composé d'enrobage.

Par ailleurs, il est également possible d'utiliser en complément, soit des agents de soufflages physique, tels que des composés du groupe des chloro-fluorohydrocarbons hydrogénés, des hydrocarbures incomplètement halogénés ou encore, des hydrocarbures comme le n-pentane, le cyclopentane et l'hexane, soit des charges structurelles ou non, telles que des billes ou microbilles de verre, du talc, du kaolin, soit des renforts tels que des fibres ou microfibres minérales (verres, roches) ou organiques (aramides, cellulose,....), ou encore des colorants, des ignifugeants sous forme liquides ou solides, des plastifiants, des solvants, des charges spécifiques à certains domaines (par exemple des neutrophages), de produits réactifs tels que la résorcine, l'alcool furfurilique, ... d'agents de piégeage de composants organiques volatils.

Bien entendu ces produits devront être choisis pour leurs compatibilités avec le procédé et peuvent être indifféremment ajoutés seuls ou en mélange avec l'une ou l'autre des parties.

## Revendications

1. Procédé de neutralisation de l'acidité résiduelle contenue dans les composés phénoliques constitués de résines phénoliques de type résol, mises en oeuvre par catalyse avec un ou des acides organiques ou inorganiques, tels que l'acide sulfurique, l'acide phosphorique, un acide organique fort comme les acides arylsulfoniques tel que les acides phénol sulfoniques, toluène sulfoniques, méthane sulfoniques, un acide organique ou arylsulfonique modifié, un acide carboxylique, tel que l'acide lactique, maléique, utilisé en mélanges avec un ou plusieurs acides forts, ces acides étant à la fois catalyseurs et permettant éventuellement un soufflage chimique du composé phénolique par réaction avec des composés carbonatés, tels que du bicarbonate de sodium, du carbonate de calcium, pris seuls ou en mélange, **caractérisé en ce qu'**il consiste à ajouter un composé neutralisant comportant un produit réactif avec les acides organiques et inorganiques et un composé d'enrobage, de sorte que le produit réactif réagit seulement après le début de la polymérisation, le composé d'enrobage permettant une libération contrôlée à retard, conditionnelle ou progressive, du composé réactif de manière à ne pas empêcher et à minimiser ses interférences sur la réticulation du polymère.

2. Procédé, suivant la revendication 1, **caractérisé en ce qu'**il met en oeuvre des composés enrobés, bloqués ou ayant subit un traitement de surface susceptible de ralentir leur réaction de neutralisation de l'acide.

3. Procédé, suivant l'une quelconque des revendications 1 et 2, **caractérisé en ce qu'**il consiste, dans un deuxième temps, lorsque l'enrobage, le blocage ou le traitement de surface est enlevé, à neutraliser l'acide résiduel contenu dans le matériau après sa polymérisation ou en fin de polymérisation.

4. Procédé, suivant l'une quelconque des revendications 1 à 3, **caractérisé en ce que** le composé neutralisant est ajouté de façon stoechiométrique par rapport à la quantité de fonctions acides à neutraliser.

5. Composé neutralisant mis en oeuvre par le procédé suivant l'une quelconque des revendications 1 à 4, **caractérisé en ce qu'**il comporte un composé dit "réactif" envers le ou les acides et un composé dit "d'enrobage" retardant cette réaction.

6. Composé réactif mis en oeuvre par le procédé suivant l'une quelconque des revendications 1 à 4, **caractérisé en ce qu'**il se présente sous forme liquide, solide ou de cire, à température ambiante.

7. Composé réactif, suivant la revendication 6, **caractérisé en ce qu'**il est un composé naturel, tel que des poudres de roches, ou sous forme synthétique.

8. Composé réactif, suivant la revendication 6, **caractérisé en ce qu'**il est une poudre minérale soluble ou non dans l'eau, à savoir, telle que :
1. les carbonates, de préférence de sodium, de calcium, de potassium, de zinc, de zinc basique, de magnésium, de fer, d'ammonium, de manganèse, de cuivre, de cuivre basique, ....
2. les bicarbonates, de préférence d'ammonium, de potassium, de sodium, ....
3. les Hydroxydes, de préférence de calcium, de magnésium, de potassium, de sodium, ...
4. les oxydes, de préférence de magnésium, de calcium, de zinc, ...
5. les silicates, de préférence de sodium, de potassium,...
6. les phosphates, de préférence tri potassique, de calcium, de cuivre, de potassium, de magnésium, de sodium, de zinc, hexa meta phosphate de sodium, pyrophosphate tetrapotassique, ...

9. Composé réactif, suivant la revendication 6, **caractérisé en ce qu'**il est un composé organo minéral, de préférence solide, tel que, par exemple, les composés effervescents carbonate de glycine sodique ou encore un composé organique, tel que les phénolates, les amines primaires.

10. Composé d'enrobage mis en oeuvre par le procédé suivant l'une quelconque des revendications 1 à 4, **caractérisé en ce qu'**il est, soit :
- un polymère d'origine naturelle tel que la gélatine, la caséine, le chitosane, l'agarose, l'amidon et l'amidon modifié, l'alginate de sodium, ....
- un polymère semi-synthétique dérivé cellulosique tel que les acétates de cellulose, l'acétate phtalate de cellulose, la cellulose butyrate, l'éthylcellulose, le méthylcellulose, l'hydroxypropylméthylcellulose, l'acétate-triméllitate de cellulose,etc...
- un polymère synthétique comme, par exemple, les copolymères d'esters acryliques et méthacryliques, les polyoléfines, les polyéthylènes, les polypropylènes, les copolymères acrylo-vinyliques,etc...
- un lipide solide à température ambiante du type des acides gras tels que l'acide palmitique, l'acide stéarique; les alcool gras , les glycérides à longue chaînes, les dérivés cholestériques, les cires d'origines diverses, telle que la cire de Carnauba, la cire d'abeille, etc...
- une cire d'origine pétrolière (dite cire minérale) comme par exemple les paraffines, les composés paraffiniques branchés, les hydrocarbures naphténiques, etc...
- des produits solubles tels que des sucres ou des dérivées de sucres, et **en ce qu'**il est désactivé de différentes façons, par exemple sous l'action de la chaleur, d'un solvant, d'une modification des tensions de surfaces, d'une réaction chimique permettant sa dégradation ou une modification de sa forme physique ou chimique entraînant la libération du composé réactif.

11. Composé d'enrobage, suivant la revendication 10, **caractérisé en ce qu'**il est utilisé seul ou en combinaison.

12. Composé d'enrobage, suivant la revendication 10, **caractérisé en ce qu'**il est de nature organique, à savoir à base de sucres, minérale, par exemple à base de sels plus ou moins solubles ou organo-minérale, tel qu'à base d'un stéarate de calcium.

13. Composé d'enrobage, suivant l'une quelconque des revendications 10 à 12, **caractérisé en ce que** son épaisseur est variable, afin d'optimiser le temps de réaction par rapport à la nature ou à la quantité de l'acide dégagé par la réaction et au temps de mise en oeuvre du produit.

14. Composé d'enrobage, suivant l'une quelconque des revendications 10 à 12, **caractérisé en ce qu'**il est modifié pour faciliter l'incorporation du composé neutralisant dans la matrice phénolique, par exemple par éthoxylation, pour améliorer l'incorporation dans un résol en phase aqueuse.

15. Composé d'enrobage, suivant la revendication 10, **caractérisé en ce qu'**il est de nature poreuse, de façon à limiter ou conditionner l'accès de l'acide au composé réactif permettant une neutralisation progressive de celui-ci.

16. Composé d'enrobage, suivant l'une quelconque des revendications 10 à 12, **caractérisé en ce qu'**il comporte, en outre, des tensioactifs ou des agents plastifiants.

17. Composé neutralisant mis en oeuvre par le procédé suivant l'une quelconque des revendications 1 à 4, **caractérisé en ce qu'**il est utilisé seul ou en combinaison avec d'autres composés neutralisants et est additionné de façon stoechiométrique ou non par rapport à la quantité de fonction acide à neutraliser, de façon à ne pas diminuer les performances ou dégrader le polymère formé.

18. Composé neutralisant, suivant la revendication 17, **caractérisé en ce qu'**il est utilisé en combinaison avec d'autres substances non traitées pouvant jouer le rôle de tampon, telles que, par exemple, les citrates de sodium, tri potassium citrate, tri sodium citrate, tri calcium dicitrate tétrahydraté, tri hydrates d'aluminium, ces substances étant, peu ou non solubles en milieu aqueux et leur pH en solution étant inférieur à 9.

19. Composé neutralisant, suivant la revendication 17, **caractérisé en ce qu'**il se présente sous forme solide ou de cires facilement dispersables à température ambiante.

20. Composé neutralisant, suivant la revendication 17, **caractérisé en ce qu'**il est sous forme de structures carbonées contenant le composé réactif, de type micelles, de liposomes, de sphérulites isolant le composé réactif, de nanomatériaux incluant un composé réactif, de liquides réactif encapsulés ou micro-encapsulés.

21. Composé neutralisant, suivant la revendication 17, **caractérisé en ce qu'**il est complété, en outre, par des agents de soufflage physique, tels que des composés du groupe des chloro-fluorohydrocarbons hydrogénés, des hydrocarbures incomplètement halogénés ou encore, des hydrocarbures comme le n-pentane, le cyclopentane et l'hexane, des charges structurelles ou non, telles que des billes ou microbilles de verre, du talc, du kaolin, des renforts tels que des fibres ou microfibres minérales (verres, roches) ou organiques (aramides, cellulose,....), ou encore des colorants, des ignifugeants sous forme liquides ou solides, des plastifiants, des solvants, des charges spécifiques à certains domaines (par exemple des neutrophages), de produits réactifs tels que la résorcine, l'alcool furfurilique,...d'agents de piégeage de composants organiques volatils.

22. Produit mis en oeuvre par le procédé suivant l'une quelconque des revendications 1 à 4, **caractérisé en ce qu'**il se présente sous forme de bi, tri ou multi composants suivant la mise en oeuvre souhaitée.
